# FASCICULE DE BREVET EUROPEEN

(11) **EP 1 883 937 B1**
(45) Date de publication et mention de la délivrance du brevet: **18.02.2009**
(21) Numéro de dépôt: 06764653.9
(22) Date de dépôt: 22.05.2006
(51) Int. Cl.: H01G 9/058

(54) **FILM DE MATIÈRE ACTIVE CARBONÉE, ELECTRODE POUR SYSTÈMES DE STOCKAGE D'ÉNERGIE, SON PROCÉDÉ DE FABRICATION ET SYSTÈME DE STOCKAGE D'ÉNERGIE LA COMPRENANT**
SCHICHT AUS KOHLENSTOFF-HALTIGEM MATERIAL, ELEKTRODE FÜR ENERGIESPEICHERSYSTEME, HERSTELLUNGSVERFAHREN DAFÜR UND ENERGIESPEICHERSYSTEM MIT DER ELEKTRODE
FILM OF CARBONACEOUS ACTIVE MATERIAL, ELECTRODE FOR ENERGY STORAGE SYSTEMS, PRODUCTION METHOD THEREOF AND ENERGY STORAGE SYSTEM COMPRISING SAID ELECTRODE

(30) Priorité: 23.05.2005 FR 0505132
(43) Date de publication de la demande: 06.02.2008
(73) Titulaire: CECA S.A., 92250 La Garenne Colombes (FR)
(72) Inventeur: AUBERT, Thierry, F-64000 Pau (FR); SIMON, Patrice, F-31400 Toulouse (FR); TABERNA, Pierre-Louis, F-31120 Roques sur Garonne (FR)
(74) Mandataire: Lhoste, Catherine
(86) Numéro de dépôt international: PCT/FR2006/001157
(87) Numéro de publication internationale: WO 2006/125901

(56) Documents cités:
- EP-A1- 1 049 116
- EP-A1- 1 211 702
- WO-A-98/34977
- US-A- 5 430 606
- US-A- 5 905 629
- US-A- 5 926 361

## Description

L'invention a pour objet des électrodes destinées notamment aux systèmes de stockage d'énergie de type double couche (supercondensateurs). L'invention vise aussi le procédé de préparation de ces électrodes ainsi que les systèmes de stockage d'énergie les contenant.

Les systèmes de stockage d'énergie appelés "supercapacités", "supercondensateurs", « condensateurs à double couche électrique » ou en anglais « ultracapacitors » ou « EDLC » ( Electric Double Layer Capacitors ) sont constitués de collecteurs de courant sur lesquels est appliqué un film de matière active. Ce système est ensuite immergé dans un solvant contenant un sel et permet de stocker l'énergie électrique pour une utilisation ultérieure.

Les matières actives les plus utilisées dans les systèmes de stockage d'énergie de type double couche sont les charbons actifs, en raison de leur surface spécifique importante (généralement dans la fourchette 500-2.500 m²/g) et de leurs coûts relativement faibles. Ils se différencient par leur origine ou précurseur (houille, lignite, bois, coques de fruits, etc.) ainsi que par le type d'activation qu'ils ont subi, physique (c'est-à-dire à la vapeur d'eau) ou chimique (acide phosphorique, soude ou potasse, par exemple) et/ou le type de post-traitement de purification qui leur confèrent un ensemble de propriétés caractéristiques.

Les trois propriétés essentielles des matières actives, par exemple des charbons actifs, auxquelles on s'intéresse pour cette application sont les suivantes :
a) la distribution poreuse, qui détermine l'accessibilité des ions de l'électrolyte à la surface de la matière active : la quantité d'ions accessibles à la surface du charbon détermine la capacité, exprimée en farads (F) de l'électrode, c'est-à-dire sa densité d'énergie, tandis que la mobilité des ions contribue à la résistance surfacique de l'électrode, exprimée en ohm.cm² (Ω.cm2), elle-même inversement proportionnelle à la densité de puissance. La distribution poreuse des charbons actifs se décrit généralement par :
   - le volume poreux total, exprimé par exemple en cm³ d'azote par gramme de charbon actif,
   - la distribution, en pourcentage, de ce volume en fonction de la taille des pores, qui sont classés en micropores (diamètre < 2 nm), mésopores (diamètre 2-50 nm) ou macropores (diamètre > 50 nm),
   - la surface spécifique ou surface BET exprimée en m² /g de charbon actif,
b) la pureté : le comportement des électrodes en vieillissement est déterminé en particulier par la nature et la quantité d'impuretés oxydo-réductibles présentes dans le charbon actif qui s'avèrent nuisibles pour les propriétés électriques du charbon,
c) la granulométrie, qui influe en particulier sur la mise en oeuvre du charbon au cours de la fabrication de l'électrode.

On connaît certains types de charbons actifs dont la porosité permet d'obtenir plus particulièrement des densités d'énergie importantes ou des densités de puissance élevées pour les supercondensateurs, par example, décrit dans EP 1049116.

Dans US 5.430.606, sont décrits des charbons actifs obtenus par activation chimique à la soude et lavage à l'eau ; les systèmes de stockage d'énergie fabriqués avec ces charbons présentent de bonnes performances initiales en terme de densité d'énergie, mais aucune indication n' est fournie sur leur comportement au vieillissement. En outre, le procédé d'obtention décrit est coûteux, puisque l'activation est de type chimique.

US 5.905.629, US 6.060.424 et US 5.926.361 décrivent des supercondensateurs à forte densité d'énergie obtenus à partir de charbons actifs ayant une structure poreuse particulière constituée essentiellement soit de micropores (US 5.905.629 et US 6.060.424), soit de mésopores (US 5.926.361), mais aucune indication n'est donnée sur le comportement au vieillissement des électrodes, propriété fondamentale des supercondensateurs. En outre, ces charbons sont obtenus par un procédé coûteux consistant en une activation chimique à l'acide phosphorique du précurseur de charbon activé suivi d'un lavage à l'eau pour éliminer les impuretés et d'un traitement thermique supplémentaire.

JP 09063907 décrit l'utilisation dans les supercondensateurs d'un charbon actif obtenu par activation physique puis lavage à l'eau et caractérisé par une taille comprise entre 6 et 10 µm et une surface spécifique comprise entre 1.000 et 1.500 m²/g. Cependant, aucune indication n'est fournie sur les impuretés présentes dans le charbon final ni sur les conditions réelles de vieillissement auxquelles ont été soumises les supercondensateurs.

Comme il est décrit dans IEEE Spectrum de janvier 2005, page 29, l'utilisation à grande échelle des supercondensateurs, telle que par exemple dans l'industrie automobile, nécessite une réduction de leur coût d'un facteur 5 et une augmentation de leur capacité de stockage d'énergie : aucune des solutions techniques connues ne permet d'obtenir des supercondensateurs présentant à la fois des densités d'énergie et de puissance élevées et stables au cours du temps, à un prix compatible avec les contraintes économiques du marché automobile.

L'invention propose des supercondensateurs composés d'au moins une électrode comprenant un collecteur de courant revêtu sur une ou deux faces d'un film à base d'au moins un charbon actif, noté dans tout ce qui suit CA, qui présente les caractéristiques suivantes :
a) porosité :
   - volume microporeux (diamètre < 2 nm) déterminé par la méthode DFT compris entre 0,5 cm³/g et 0,75 cm³/g, et de préférence entre 0,5 cm³/g et 0,65 cm³/g, et représentant au moins 75 % et de préférence au moins 78 % de la porosité totale dudit charbon,
   - surface spécifique BET à l'azote comprise entre 1.200 et 1.800 m²/g, et de préférence entre 1.200 et 1.600 m²/g,
b) pureté :
   - taux de cendres totales, déterminé par la méthode ASTM D2866-83 inférieur à 1,5 % en poids,
   - les pourcentages massiques des impuretés suivantes, déterminés par minéralisation (attaque HNO₃/H₂O₂) suivie d'une analyse par spectrométrie d'émission (ICP) ou, pour les chlorures, par extraction à l'eau suivie d'une analyse par chromatographie ionique, sont tels que :

   - [chlorures] ≤ 80 ppm
   - [chrome] ≤ 20 ppm
   - [cuivre] ≤ 50 ppm
   - [fer] ≤ 300 ppm
   - [manganèse] ≤ 20 ppm
   - [nickel] ≤ 10 ppm
   - [zinc] ≤ 20 ppm
c) granulométrie, déterminée par diffraction laser, telle que
   3 µm ≤ D50 ≤15 µm
   10 µm ≤ D90 ≤ 60 µm
d) pH, déterminé selon la méthode CEFIC, compris entre 3,5 et 9, de préférence entre 4,5 et 8.

Les électrodes selon l'invention dont le film de matière active est tel que défini précédemment présentent les caractéristiques suivantes, lorsqu'elles sont utilisées avec un électrolyte organique, tel que par exemple le tétraéthylammonium tétrafluoroborate (Et₄NBF₄) dans l'acétonitrile :
o densité d'électrode ou masse volumique du film de matière active de l'électrode supérieure ou égale à 0,45 g/cm³, de préférence supérieure ou égale à 0,5 g/cm³,
o capacité volumique initiale supérieure ou égale à 47, de préférence supérieure ou égale à 50 F/cm³, mesurée à 5 mA/cm²,
o rapport entre la capacité volumique après 10.000 cycles, mesurée à +/- 5 mA/cm² entre 0 et 2,3 V et la capacité volumique initiale supérieur ou égal à 0,85, de préférence supérieur ou égal à 0,9,
o résistance surfacique initiale de la cellule (composée de 2 électrodes identiques et d'un séparateur ), mesurée à 1 kHz, inférieure ou égale à 1, de préférence inférieure ou égale à 0,9, et avantageusement inférieure ou égale à 0,85 Ω.cm²,
o rapport entre la résistance surfacique de la cellule après 10.000 cycles et la résistance initiale inférieur ou égal à 1, 5, de préférence inférieur ou égal à 1,3.

Ces électrodes sont particulièrement utiles pour la fabrication de systèmes de stockage d'énergie à double couche tels que les supercondensateurs. En effet, par rapport aux électrodes fabriquées avec les charbons commerciaux vendus pour cette application, tels que l'« YP17 » commercialisé par la société Kuraray ou le « A Supra » commercialisé par la société Norit testés dans les exemples comparatifs ci-dessous, les électrodes de l'invention ont une masse volumique ou densité d'électrode exceptionnellement élevée, conduisant naturellement à des capacités volumiques et donc à des densités d'énergie excellentes, tout en conservant des résistances très faibles, donc des densités de puissance élevées.

De plus, les charbons actifs ayant les caractéristiques indiquées ci-dessus peuvent être préparés à partir de matières peu onéreuses, telles que des matières premières d'origine végétale (bois, coque de fruits, etc...), par des méthodes d'activation bien connues de l'homme de l'art et peu coûteuses telles que l'activation physique, ce qui les rend particulièrement attractif d'un point de vue économique.

L'invention a également pour objet un procédé de préparation des films de matière active à base d'au moins un charbon actif ayant les caractéristiques indiquées ci-dessus ainsi que des électrodes comprenant un tel film appliqué sur une ou deux faces d'un collecteur de courant.

Ce procédé de préparation comprend les étapes suivantes :
(a) mélange d'une matière pulvérulente carbonée de départ comprenant au moins 80 et jusqu'à 97 parties en poids de CA et d'un solvant, de préférence dans la proportion 3 à 50 parties en poids de solvant pour 1 partie de matière pulvérulente.
   Le solvant peut être tout solvant aqueux ou organique tel que l'éthanol.
   Selon un mode de réalisation, jusqu'à 20 parties en poids du ou des CA peut être remplacé par un ou plusieurs autres matériaux carbonés, choisis par exemple parmi les charbons actifs, les noirs d'acétylène ou de carbone, les nanotubes de carbone. Les nanotubes de carbone (NTC) sont connus et sont en général constitués de feuillets de graphite enroulés en un (Single Wall Nanotube SWNT) ou plusieurs feuillets (Multi Wall Nanotube MWNT). Ces 2 types de NTC sont disponibles dans le commerce ou peuvent être préparés par des méthodes connues. On peut également utiliser des nanotubes recouverts de polymère conducteur en vue d'améliorer leur comportement faradique et/ou des nanotubes dopés par un oxyde métallique.
   Selon un mode de réalisation, l'étape a) est effectuée par ultrasonication pendant une durée par exemple comprise entre 5 et 60 minutes.
   Selon un mode de réalisation, l'étape a) est effectuée à une température d'au moins 50 °C, par exemple de 50 à 80 °C.
(b) ajout d'un liant polymère et mélange jusqu'à homogénéisation. Peuvent être utilisés comme liants polymères par exemple les polymères thermoplastiques ou élastomères ou leurs mélanges solubles dans un solvant. Parmi ces polymères, on peut citer en particulier les polyéthers, tels que le polyoxyéthylène (POE) et le polyoxypropylène (POP), les polyalcools tels que l'alcool polyvinylique (PVA), les copolymères éthylène-acétate de vinyle (EVA), le polytétrafluoroéthylène (PTFE), les copolymères styrène/butadiène, le polyfluorure de vinylidène (PVDF), la carboxyméthylcellulose (CMC) et le polyimide. On utilise de manière avantageuse des liants en suspension aqueuse ou en solution dans un solvant.
   De préférence, la matière carbonée est mélangée avec le polymère en un ratio pondéral de 99/1 à 70/30, de préférence de 98/2 à 90/10.
   Selon un mode de réalisation, le liant est une suspension aqueuse de PTFE ou de styrène/butadiène.
   Selon un mode de réalisation, le liant est une solution de PVDF ou de copolymère PVDF-HFP (VF2-HFP) dans un solvant organique tel que l'acétone ou la N-méthyl pyrrolidone, le solvant pouvant également contenir du carbonate d'éthylène et/ou de propylène, jouant le rôle de plastifiant.
(c) évaporation partielle du solvant, à une température de préférence comprise entre 50 et 100 °C, pour obtenir une pâte ou une encre ou une barbotine, selon la consistance désirée,
(d) éventuellement malaxage de la pâte, de préférence jusqu'à obtention d' une tenue mécanique adéquate pour l'étape suivante de mise en forme,
(e) mise en forme de la pâte, de l'encre ou de la barbotine en film mince, par exemple par enduction sur un support.
   Pour la fabrication des films d'électrodes, on part de la pâte, encre ou barbotine obtenue comme ci-dessus à l'étape (c) ou (d) que l'on applique sur un support, notamment par enduction. Il est avantageux que l'enduction soit réalisée sur un support pelable, en général de forme plane, par exemple à l'aide d'un gabarit. On peut aussi fabriquer directement l'électrode en réalisant l'enduction directement sur le collecteur de courant.
(f) séchage du film, par exemple sous vide primaire à une température d'au moins 80 °C, On obtient un film dont l'épaisseur dépend notamment de la proportion CA/liant et de la technique de mise en forme retenue : elle est en général comprise entre quelques µm et un mm et de préférence comprise entre 30 et 500 µm.
   On ne sortirait pas de l'invention en préparant des films de CA/liant polymère par un procédé d'extrusion tel que décrit par exemple dans WO 98/34977.
(g) recouvrement d'une ou des deux faces d'un collecteur de courant par le film obtenu en (f).

Le collecteur de courant peut être tout matériau conducteur électrique qui est non conducteur vis-à-vis des ions et électrochimiquement stable dans les conditions de fonctionnement du système de stockage d'énergie. Des matériaux satisfaisants à utiliser pour produire ces collecteurs comprennent : le carbone, les métaux et alliages passifs tel qu'aluminium, titane et aciers inoxydables, les polymères électroniquement conducteurs, les polymères électroniquement non-conducteurs chargés en matériau conducteur de façon à rendre le polymère électroniquement conducteur, et matériaux similaires.

Selon un mode avantageux, les collecteurs sont des feuilles, grilles ou déployés d'aluminium d'épaisseur comprise entre 30 et 200 µm, de préférence entre 75 et 150 µm.

Selon un mode de réalisation préféré de l'invention, ces collecteurs subissent le traitement suivant :
- laminage à une épaisseur comprise entre 75 et 150 µm
- dépolissage mécanique
- traitement de surface, par exemple telle que la technique dite « etching » ou telle que l'application d'une sous-couche d'accrochage, par exemple par vaporisation d'une peinture ; cette peinture peut par exemple être à base de polyuréthane et éventuellement additivée d'un conducteur de type noir d'acétylène pour la rendre conductrice.

La présente invention concerne le procédé de préparation du film de matière active à base de CA comprenant les étapes (a) à (f) ou (a) à (e) du procédé détaillé ci-dessus ainsi que le procédé de fabrication de l'électrode contenant ledit film comprenant les étapes (a) à (g) ou (a) à (f).

L'invention a également pour objet des systèmes de stockage d'énergie de type double couche tels que les supercondensateurs comprenant une paire d'électrodes dont au moins une (et de préférence les deux) est une électrode selon l'invention telle que définie précédemment, un séparateur non conducteur électroniquement, poreux et conducteur d'ions, et un électrolyte.

Les électrolytes appropriés pour produire des supercondensateurs consistent en tout milieu hautement conducteur d'ions tels qu'une solution aqueuse d'un acide, d'un sel ou d'une base. Si désiré, les électrolytes non-aqueux peuvent aussi être utilisés tels que le tétraéthylammonium tétrafluoroborate (Et₄NBF₄) dans l'acétonitrile ou la gamma-butyrolactone ou le carbonate de propylène.

Une des électrodes peut être composée d'un autre matériau connu dans le métier.

Entre les électrodes se trouve un séparateur, généralement en un matériau de grande porosité dont les fonctions sont d'assurer une isolation électronique entre les électrodes tout en laissant passer les ions de l'électrolyte.

Le procédé de fabrication d'un film de matière active, d'une électrode et la cellule de stockage d'énergie comprenant 2 électrodes identiques selon l'invention sont décrits plus en détail dans les exemples suivants. Ces exemples sont fournis à titre d'illustration et non à titre de limitation de l'invention.

### Exemples

Dans les exemples, les électrodes sont fabriquées comme suit :
- mélange sous ultrasons de 9 parties en poids de charbon actif séché, de 90,5 parties d'éthanol à 70 °C pendant 15 min, puis de 0,5 partie d'une suspension aqueuse à 60 % en poids de PTFE,
- évaporation partielle du solvant à 80 °C et malaxage de la pâte obtenue en présence d'éthanol sur un support inerte (plaque de verre) jusqu'à fibrillation complète du PTFE,
- séchage de la pâte sous vide primaire à 100 °C,
- recouvrement d'une face de deux collecteurs en déployé d'aluminium (99,9% en aluminium) préalablement laminés à 150 µm, dépoli mécaniquement avec du papier de verre de grade N° 180 et recouvert de peinture à base polyuréthane comprenant 50 % en poids de noir d'acétylène, par la pâte pour constituer l'électrode. L'épaisseur totale, après laminage est de 450 µm.

Les systèmes sont assemblées en boîte à gants sous atmosphère contrôlée d'eau et d'oxygène (dont les teneurs sont inférieures au ppm). On prend 2 électrodes carrées de 4 cm² de surface entre lesquelles on intercale un séparateur en polymère microporeux. On maintient le tout avec 2 cales de PTFE et 2 pinces en acier inox. L'élément est ensuite placé dans une cellule électrochimique étanche contenant comme électrolyte une solution de tétrafluoroborate de tétraéthylammonium à 1,5 mole /litre d'acétonitrile.

Dans les exemples, le protocole de mesure des performances électrochimiques des cellules ainsi assemblées est le suivant :
- cyclage galvanostatique : on impose aux bornes du condensateur un courant constant de + ou - 5 mA/cm² entre 0 et 2,3 V, ce qui permet l'établissement d'une courbe de charge-décharge. La capacité est déduite de la pente de décharge du condensateur et l'on exprime la capacité par électrode et par gramme de matériau actif en multipliant cette valeur par deux puis en divisant par la masse de matériau actif par électrode. On mesure la résistance par spectroscopie d'impédance électrique. Ce test consiste à soumettre le condensateur à une tension sinusoïdale de faible amplitude mais de fréquence variable autour d'un point de fonctionnement stationnaire. Le courant de réponse est déphasé par rapport à la tension d'excitation; l'impédance complexe est alors le rapport entre la tension et l'intensité, analogue à une résistance. On exprime la résistance en multipliant la partie réelle de l'impédance, pour une fréquence de 1 kHz, par la surface de l'électrode.
- tests de vieillissement réalisés de la manière suivante : un cyclage galvanostatique à +/- 50 mA/cm² est effectué entre 0 et 2,3 V. La capacité est directement déduite de la droite de décharge du supercondensateur, et la résistance est mesurée à chaque fin de charge par une série d'impulsions en courant à 1 kHz. Les mesures réalisées à chaque cycle permettent de suivre l'évolution de la capacité et de la résistance du supercondensateur en fonction du nombre de cycles de charge-décharge. Le cyclage est effectué pendant un temps garantissant la parfaite étanchéité de la cellule électrochimique, soit pendant une durée de 10.000 cycles.

### Exemple 1 (selon l'invention)

On part d'un charbon actif ayant les caractéristiques suivantes :

| **Porosité** | | | |
|---|---|---|---|
| | surface BET | m²/g | 1446 |
| | volume microporeux < 2 nm | cm³/g | 0,598 |
| | volume total | cm³/g | 0,768 |

| **Granulométrie** | | | |
|---|---|---|---|
| | D 50 | µm | 7,7 |
| | D90 | µm | 22,0 |
| **pH** | | | 6 |
| **Pureté** : | Cendres Totales | % | 0,9 |
| | chrome | ppm | <5 |
| | cuivre | ppm | 25 |
| | fer | ppm | 280 |
| | manganèse | ppm | 10 |
| | nickel | ppm | <5 |
| | zinc | ppm | 5 |

Les performances des cellules de stockage d'énergie réalisées selon la procédure décrite plus haut sont réunies dans le tableau ci-dessous :

| densité du | capacité | capacité vol. | Résistance | Résistance |
|---|---|---|---|---|
| film | vol. initiale | après 10.000 | surfacique initiale | surfacique après |
| d'électrode | (en F/cm³, | cycles / | (en Ω.cm², mesurée | 10.000 cycles / |
| (g/cm³) | mesurée à | capacité vol. | à 1 kHz) | Résistance |
| | 5 mA/cm²) | initiale | | surfacique initiale |
| 0,56 | 52 | 0,9 | 0,8 | 1,2 |

### Exemple 2

On réalise 2 cellules contenant à la place du charbon actif décrit à l'exemple 1 et dans les mêmes proportions, un charbon actif vendu par la société Kuraray sous la dénomination « YP17 » pour l'une et un charbon actif commercialisé par la société Norit sous la dénomination « A Supra » pour l'autre ; les caractéristiques de ces 2 charbons actifs commerciaux sont indiquées ci-dessous :

| | | | YP17 | A Supra |
|---|---|---|---|---|
| **Porosité** | | | | |
| | surface BET | m²/g | 1.686 | 1.688 |
| | volume microporeux < 2 nm | cm³/g | 0,691 | 0,745 |
| | volume total | cm³/g | 0,889 | 1,172 |

| **Granulométrie** | | | | |
|---|---|---|---|---|
| | D 50 | µm | 12,88 | 7,4 |
| | D90 | µm | 36,70 | 20,18 |
| **pH** | | | 5,7 | 6,8 |
| **Pureté** : | Cendres Totales | % | 0,6 | 2,1 |
| | chrome | ppm | <5 | 30 |
| | cuivre | ppm | 20 | 35 |
| | fer | ppm | 100 | 220 |
| | manganèse | ppm | 5 | 5 |
| | nickel | ppm | <5 | <5 |
| | zinc | ppm | <5 | <10 |

Les performances des cellules à base des charbons YP 17 et A Supra sont réunies dans le tableau ci-dessous :

| | densité du | capacité vol. | capacité vol. | résistance | résistance |
|---|---|---|---|---|---|
| | film | initiale | après 8.000 | initiale | après 8.000 |
| | d'électrode | (en F/cm³, | cycles / | (en Ω.cm², | cycles / |
| | ( g/cm³ ) | mesurée à 5 | capacité vol. | mesurée à | résistance |
| | | mA/cm²) | initiale | 1 kHz) | initiale |
| YP17 | 0,45 | 46 | 0,9 | 0,8 | 1,5 |
| A Supra | 0,44 | 40 | 0,9 | 0,8 | 1,1 |

La comparaison des performances des électrodes de l'exemple 1 (selon l'invention) et de l'exemple 2 montre que l'électrode selon l'invention conduit à une augmentation de 13 à 30 % des capacités volumiques initiale et après vieillissement, tout en gardant une résistance très faible.

## Revendications

1. Film de matière active carbonée pour électrode de systèmes de stockage d'énergie de type double couche tels que les supercondensateurs, **caractérisé en ce qu'**il est à base d'au moins un charbon actif (CA) qui présente les caractéristiques suivantes :
a) porosité :
• volume microporeux (diamètre des pores < 2 nm) déterminé par la méthode DFT compris entre 0,5 cm³/g et 0,75 cm³/g, et de préférence entre 0,5 cm³/g et 0,65 cm³/g, et représentant au moins 75 et de préférence au moins 78 % de la porosité totale dudit charbon,
• surface spécifique BET comprise entre 1.200 et 1.800 m²/g, et de préférence entre 1.200 et 1.600 m²/g,
b) pureté :
• taux de cendres totales, déterminé par la méthode ASTM D2866-83 inférieur à 1,5 % en poids,
• les pourcentages massiques des impuretés suivantes, déterminés par minéralisation (attaque HNO₃/H₂O₂) suivie d'une analyse par spectrométrie d'émission (ICP) ou, pour les chlorures, par extraction à l'eau suivie d'une analyse par chromatographie ionique, sont tels que :
• [chlorures] ≤ 80 ppm
• [chrome] ≤ 20 ppm
• [cuivre] ≤ 50 ppm
• [fer] ≤ 300 ppm
• [manganèse] ≤20 ppm
• [nickel] ≤ 10 ppm
• [zinc] ≤ 20 ppm
c) granulométrie, déterminée par diffraction laser, telle que
3 µm ≤ D50 ≤ 15 µm
10 µm ≤ D90 ≤ 60 µm
d) pH, déterminé selon la méthode CEFIC, compris entre 3,5 et 9, et de préférence entre 4,5 et 8,
et d'au moins un matériau polymère, d'épaisseur inférieure ou égale à 1 mm, et de préférence comprise entre 30 et 500 µm.

2. Electrode comprenant un collecteur de courant revêtu sur une ou deux faces d'un film tel que défini à la revendication 1 présentant les caractéristiques suivantes dans un électrolyte organique, tel que par exemple le tétraéthylammonium tétrafluoroborate (Et₄NBF₄) dans l'acétonitrile :
o densité d'électrode ou masse volumique du film de matière active de l'électrode supérieure ou égale à 0,45 g/cm³, de préférence supérieure ou égale à 0,5 g/cm³,
o capacité volumique initiale supérieure ou égale à 47, de préférence supérieure ou égale à 50 F/cm³ d'électrode, mesurée à 5 mA/cm²,
o rapport entre la capacité volumique après 10.000 cycles, mesurée à +/- 5 mA/cm² entre 0 et 2,3 V, et la capacité volumique initiale supérieur ou égal à 0,85, de préférence supérieur ou égal à 0,9,
o résistance surfacique initiale de la cellule (composée de 2 électrodes identiques et d'un séparateur), mesurée à 1 kHz, inférieure ou égale à 1, de préférence inférieure ou égale à 0,9, et avantageusement inférieure ou égale à 0,85 Ω.cm²,
o rapport entre la résistance surfacique après 10.000 cycles et la résistance initiale inférieur ou égal à 1, 5, de préférence inférieur ou égal à 1,3 .

3. Procédé de préparation d'une électrode telle que définie à la revendication 2, **caractérisé en ce qu'**il comprend les étapes suivantes :
(a) mélange d'une matière pulvérulente carbonée de départ comprenant au moins 80 et jusqu'à 97 parties en poids de CA et d'un solvant, aqueux ou organique, de préférence dans la proportion 3 à 50 parties en poids de solvant pour 1 partie de matière pulvérulente, de préférence à une température d'au moins 50°C, par exemple de 50 à 80 °C,
(b) ajout d'un liant polymère, sous forme de suspension aqueuse ou en solution dans un solvant, choisi parmi les polymères thermoplastiques ou élastomères ou leurs mélanges solubles dans un solvant, par exemple les polyéthers, tels que le polyoxyéthylène (POE) et le polyoxypropylène (POP), les polyalcools tels que l'alcool polyvinylique (PVA), les copolymères éthylène-acétate de vinyle (EVA), le polytétrafluoroéthylène (PTFE), les copolymères styrène/butadiène, le polyfluorure de vinylidène (PVDF) ou les copolymères de type PVDF-HFP, la carboxyméthylcellulose (CMC) et le polyimide, et mélange jusqu'à homogénéisation,
(c) évaporation partielle du solvant, à une température de préférence comprise entre 50 et 100 °C, pour obtenir une pâte ou une encre ou une barbotine,
(d) éventuellement malaxage de la pâte, de préférence jusqu'à fibrillation du liant,
(e) mise en forme de la pâte, de l'encre ou de la barbotine en film mince, par exemple par enduction sur un support, de préférence pelable, ou directement sur le collecteur de courant,
(f) séchage du film, par exemple sous vide primaire à une température d'au moins 80°C,
(g) recouvrement d'une ou deux faces d'un collecteur de courant par le film obtenu en (f).

4. Procédé de préparation d'une électrode selon la revendication 3, **caractérisé en ce qu'**à l'étape (a), jusqu'à 20 parties en poids du ou des CA peut être remplacé par un ou plusieurs autres matériaux carbonés, choisis par exemple parmi les charbons actifs, les noirs d'acétylène ou de carbone, les nanotubes de carbone.

5. Procédé de préparation d'une électrode selon la revendication 3 ou 4 , **caractérisé en ce qu'**à l'étape (b) le liant polymère est soit une suspension aqueuse de PTFE ou de styrène/butadiène, soit une solution de PVDF ou de copolymère VF2-HFP dans l'acétone, la N-méthyl pyrrolidone, et éventuellement en présence de carbonate d'éthylène et/ou de propylène.

6. Procédé de préparation d'une électrode selon l'une des revendications 3 à 5, **caractérisé en ce qu'**à l'étape (b) le ratio pondéral entre la matière carbonée et le liant polymère va de 99/1 à 70/30, de préférence de 98/2 à 90/10.

7. Procédé de préparation d'une électrode selon l'une des revendications 3 à 6, **caractérisé en ce que** les films de matière active carbonée et de liant polymère sont réalisés par extrusion (étapes (e) et (f) ).

8. Procédé de préparation d'un film de matière active tel que défini à la revendication 1 comprenant les étapes (a) à (f).

9. Système de stockage d'énergie ou supercondensateur comprenant au moins une électrode selon la revendication 2, et de préférence 2 électrodes selon la revendication 2.

## Claims

1. Film of carbonaceous active material for electrodes of energy storage systems of the double-layer type such as supercapacitors, **characterized in that** it is based on at least one activated carbon (AC) that has the following characteristics:
a) porosity:
- microporous volume (pore diameter < 2 nm) determined by the DFT method of between 0.5 cm³/g and 0.75 cm³/g, and preferably of between 0.5 cm³/g and 0.65 cm³/g, and representing at least 75% and preferably at least 78% of the total porosity of said carbon;
- BET specific surface of between 1200 and 1800 m²/g, and preferably between 1200 and 1600 m²/g;
b) purity:
- total ash content, determined by the ASTM D2866-83 method, less than 1.5% by weight;
- the following weight percentages of impurities, determined by mineralization (HNO₃/H₂O₂ oxidation) followed by an emission spectrometry (ICP) analysis or, for the chlorides, by water extraction followed by an ion chromatography analysis, are such that:
- [chlorides] ≤ 80 ppm
- [chromium] ≤ 20 ppm
- [copper] ≤ 50 ppm
- [iron] ≤ 300 ppm
- [manganese] ≤ 20 ppm
- [nickel] ≤ 10 ppm
- [zinc] ≤ 20 ppm
c) size distribution, determined by laser diffraction, such that:
3 µm ≤ D50 ≤ 15 µm
10 µm ≤ D90 ≤ 60 µm
d) pH, determined according to the CEFIC method, of between 3.5 and 9, and preferably between 4.5 and 8;
and based on at least one polymer material, of a thickness less than or equal to 1 mm, and preferably between 30 and 500 µm.

2. Electrode comprising a current collector coated on one or two sides with a film such as defined in Claim 1 having the following characteristics in an organic electrolyte, such as for example tetraethylammonium tetrafluoroborate (Et₄NBF₄) in acetonitrile:
- electrode density or density of the active material film of the electrode greater than or equal to 0.45 g/cm³, preferably greater than or equal to 0.5 g/m³;
- initial specific capacitance greater than or equal to 47, preferably greater than or equal to 50 F/cm³ of electrode, measured at 5 mA/cm²;
- ratio of the specific capacitance after 10000 cycles, measured at ± 5 mA/cm² between 0 and 2.3 V, and the initial specific capacitance greater than or equal to 0.85, preferably greater than or equal to 0.9;
- initial surface resistance of the cell (composed of 2 identical electrodes and a separator), measured at 1 kHz, less than or equal to 1, preferably less than or equal to 0.9, and advantageously less than or equal to 0.85 Ω.cm2;
- ratio of the surface resistance after 10000 cycles and the initial resistance of less than or equal to 1.5, preferably less than or equal to 1.3.

3. Method for preparing an electrode such as defined in Claim 2, **characterized in that** it comprises the following steps:
(a) mixing of a starting powdery carbonaceous material comprising at least 80 and up to 97 parts by weight of AC, and of an aqueous or organic solvent, preferably in the proportion 3 to 50 parts by weight of solvent to 1 part of powdery material, preferably at a temperature of at least 50°C, for example from 50 to 80°C;
(b) addition of a polymer binder, in aqueous suspension or in solution in a solvent, chosen from the thermoplastic or elastomeric polymers or their soluble mixtures in a solvent, for example the polyethers, such as polyoxyethylene (POE) and polyoxypropylene (POP), the polyalcohols such as polyvinyl alcohol (PVA), the ethylene vinyl acetate (EVA) copolymers, polytetrafluoroethylene (PTFE), the styrene-butadiene copolymers, polyvinylidene fluoride (PVDF) or the PVDF-HFP copolymers, carboxymethyl cellulose (CMC) and polyimide, and mixing until homogenization;
(c) partial evaporation of the solvent at a temperature preferably between 50 and 100°C to obtain a paste, an ink or a slurry;
(d) optionally, tempering of the paste, preferably until fibrillation of the binder;
(e) formation of the paste, the ink, or the slurry into a thin film, for example by coating on a support, preferably strippable, or directly on the current collector;
(f) drying of the film, for example under a low vacuum at a temperature of at least 80°C;
(g) covering of one or two sides of a current collector with the film obtained in (f).

4. Method for preparing an electrode according to Claim 3, **characterized in that** in step (a) up to 20 parts by weight of the AC(s) may be replaced by one or more other carbonaceous materials, chosen for example from the active carbons, acetylene and carbon blacks, and carbon nanotubes.

5. Method for preparing an electrode according to Claim 3 or 4, **characterized in that** in step (b) the polymer binder is either an aqueous suspension of PTFE or styrene-butadiene, or a solution of PVDF or of VF2-HFP copolymer in acetone, N-methylpyrrolidone, and optionally in the presence of ethylene and/or propylene carbonate.

6. Method for preparing an electrode according to one of Claims 3 to 5, **characterized in that** in step (b) the weight ratio of the carbon matter to the polymer binder is from 99/1 to 70/30, preferably from 98/2 to 90/10.

7. Method for preparing an electrode according to one of Claims 3 to 6, **characterized in that** the films of carbonaceous active material and of polymer binder are produced by extrusion (steps (e) and (f)).

8. Method for preparing a film of active material as defined in Claim 1 comprising the steps (a) to (f).

9. Energy storage system or supercapacitor comprising at least one electrode according to Claim 2, and preferably 2 electrodes according to Claim 2.

## Patentansprüche

1. Schicht aus einem aktiven Kohlenstoffmaterial für Elektroden von Systemen zur Energiespeicherung vom Doppelschichttyp, wie Superkondensatoren,
**dadurch gekennzeichnet, dass** sie beruht auf:
mindestens einer Aktivkohle (CA), die folgende Eigenschaften aufweist:
a) Porosität:
• Mikroporenvolumen (Porendurchmesser < 2 nm), bestimmt nach dem DFT-Verfahren, im Bereich von 0,5 bis 0,75 cm³/g und bevorzugt im Bereich von 0,5 bis 0,65 cm³/g, wobei das Mikroporenvolumen mindestens 75 und bevorzugt mindestens 78 % der gesamten Porosität der gesamten Aktivkohle ausmacht,
• spezifische BET-Oberfläche im Bereich von 1.200 bis 1.800 m²/g und bevorzugt im Bereich von 1.200 bis 1.600 m²/g,
b) Reinheit:
• Gesamt-Aschegehalt, bestimmt nach dem Verfahren nach ASTM D2866-83, kleiner als 1,5 Gew.-%,
• die Massenanteile der nachstehenden Verunreinigungen, bestimmt durch Mineralisierung (Aufschluss mit HNO₃/H₂O₂) und anschließende Analyse durch Emissionsspektrometrie (ICP) oder für die Chloride durch Extraktion mit Wasser und anschließende Analyse durch Ionenchromatographie, sind wie folgt:
• [Chloride] ≤ 80 ppm
• [Chrom] ≤ 20 ppm
• [Kupfer] ≤ 50 ppm
• [Eisen] ≤ 300 ppm
• [Mangan] ≤ 20 ppm
• [Nickel] ≤ 10 ppm
• [Zink] ≤ 20 ppm,
c) Korngrößenverteilung, bestimmt durch
Laserlichtstreuung:
3 µm ≤ D50 ≤ 15 µm
10 µm ≤ D90 ≤ 60 µm,
d) pH-Wert, bestimmt nach dem CEFIC-Verfahren, im Bereich von 3,5 bis 9 und bevorzugt im Bereich von 4,5 bis 8,
und
mindestens einem Polymermaterial mit einer Dicke kleiner als oder gleich 1 mm und bevorzugt im Bereich von 30 bis 500 µm.

2. Elektrode, die einen Stromkollektor aufweist, der auf einer Seite oder auf beiden Seiten mit einer Schicht beschichtet ist, wie sie in Anspruch 1 definiert ist, und der in einem organischen Elektrolyten, wie zum Beispiel
Tetraethylammoniumtretrafluorborat (Et₄NBF₄) in Acetonitril, folgende Eigenschaften aufweist:
o Dichte der Elektrode oder Dichte der Schicht des aktiven Materials der Elektrode größer als oder gleich 0,45 g/cm³, bevorzugt größer als oder gleich 0,5 g/cm²,
o anfängliche volumenbezogene Kapazitätsdichte größer als oder gleich 47 und bevorzugt größer als oder gleich 50 F/cm³ Elektrode, gemessen bei 5 mA/cm²,
o Verhältnis von volumenbezogener Kapazitätsdichte nach 10.000 Zyklen, gemessen bei ± 5 mA/cm² zwischen 0 und 2,3 V, zu anfänglicher volumenbezogener Kapazitätsdichte größer als oder gleich 0,85 und bevorzugt größer als oder gleich 0,9,
o anfänglicher Oberflächenwiderstand der Zelle (aufgebaut aus 2 identischen Elektroden und einem Separator), gemessen bei 1 kHz, kleiner als oder gleich 1, bevorzugt kleiner als oder gleich 0,9 und vorteilhaft kleiner als oder gleich 0,85 Ω · cm²,
o Verhältnis des Oberflächenwiderstands nach 10.000 Zyklen zum anfänglichen Oberflächenwiderstand kleiner als oder gleich 1,5 und bevorzugt kleiner als oder gleich 1,3.

3. Verfahren zur Herstellung einer Elektrode wie in An spruch 2 definiert,
**dadurch gekennzeichnet, dass** es folgende Schritte umfasst:
(a) Mischen eines pulverförmigen Kohlenstoffmaterials als Ausgangsmaterial, das mindestens 80 und bis zu 97 Gewichtsteile CA enthält, mit einem wässerigen oder organischen Lösungsmittel, bevorzugt in einem Mengenverhältnis von 3 bis 50 Gewichtsteilen Lösungsmittel auf 1 Teil des pulverförmigen Materials, bevorzugt bei einer Temperatur von mindestens 50 °C und beispielsweise bei einer Temperatur im Bereich von 50 bis 80 °C,
(b) Zugeben eines polymeren Bindemittels in Form einer wässerigen Suspension oder in Lösung in einem Lösungsmittel, wobei das polymere Bindemittel ausgewählt ist unter thermoplastischen Polymeren oder Elastomeren oder ihren Gemischen, die in einem Lösungsmittel löslich sind, zum Beispiel Polyethern, wie Polyoxyethylen (POE) und Polyoxypropylen (POP), Polyalkoholen, wie Polyvinylalkohol (PVA), EthylenVinylacetat-Copolymeren (EVA), Polytetrafluorethylen (PTFE), Styrol-Butadien-Copolymeren, Polyvinylidenfluorid (PVDF) oder Copolymeren vom Typ TVDF-HFP, Carboxymethylcellulose (CMC) und Polyimiden, und Mischen bis zur Homogenisierung,
(c) teilweises Verdampfen des Lösungsmittels bei einer Temperatur, die vorzugsweise im Bereich von 50 bis 100 °C liegt, unter Erhalt einer Paste oder einer Farbe oder einer Aufschlämmung,
(d) gegebenenfalls Verkneten der Paste, bevorzugt bis zur Fibrillierung des Bindemittels,
(e) Formen der Paste, der Farbe oder der Aufschlämmung zu einer dünnen Schicht, zum Beispiel durch Auftragen auf einen Träger, der bevorzugt abziehbar ist, oder direkt auf dem Stromkollektor,
(f) Trocknen der Schicht, zum Beispiel unter Grobvakuum bei einer Temperatur von mindestens 80 °C,
(g) Beschichten einer Seite oder beider Seiten eines Stromkollektors mit der in (f) erhaltenen Schicht.

4. Verfahren zur Herstellung einer Elektrode nach Anspruch 3, **dadurch gekennzeichnet, dass** in Schritt (a) bis zu 20 Gewichtsteile der CA oder der CAs durch ein oder mehrere andere Kohlematerialien ersetzt werden können, die zum Beispiel unter Aktivkohlen, Acetylenruß oder Kohlenstoffruß und Kohlenstoff-Nanoröhrchen ausgewählt sind.

5. Verfahren zur Herstellung einer Elektrode nach Anspruch 3 oder 4, **dadurch gekennzeichnet, dass** in Schritt (b) das polymere Bindemittel entweder eine wässerige Suspension von PTFE oder Styrol-Butadien oder eine Lösung von PVDF oder eines VF2-HFP-Copolymers in Aceton, N-Methylpyrrolidon ist, gegebenenfalls in Gegenwart von Ethylencarbonat und/oder Propylencarbonat.

6. Verfahren zur Herstellung einer Elektrode nach einem der Ansprüche 3 bis 5, **dadurch gekennzeichnet, dass** in Schritt (b) das Gewichtsverhältnis von Kohlenstoffmaterial zu polymerem Bindemittel im Bereich von 99/1 bis 70/30 und bevorzugt im Bereich von 98/2 bis 90/10 liegt.

7. Verfahren zur Herstellung einer Elektrode nach einem der Ansprüche 3 bis 6, **dadurch gekennzeichnet, dass** die Schichten aus dem aktiven Kohlenstoffmaterial und dem polymeren Bindemittel durch Extrusion erzeugt werden (Schritte (e) und (f)).

8. Verfahren zur Herstellung einer Schicht aus aktivem Material wie in Anspruch 1 definiert, das die Schritte (a) bis (f) umfasst.

9. System zur Energiespeicherung oder Superkondensator, das bzw. der mindestens eine Elektrode nach Anspruch 2 und bevorzugt 2 Elektroden nach Anspruch 2 aufweist.
